# EUROPEAN PATENT APPLICATION

(11) **EP 1 840 413 A1**
(43) Date of publication of application: **03.10.2007**
(21) Application number: 06251765.1
(22) Date of filing: 30.03.2006
(51) Int. Cl.: F16H 57/02

(54) **Gearbox device with removable cover for a motor vehicle**

(71) Applicant: Kwang Yang Motor Co., Ltd., Kaohsiung (TW)
(72) Inventor: Ho, Chao-Chang, Feng Shan City Kaohsiung Hsien (TW)
(74) Representative: Pratt, David Martin

(57) **Abstract**

A gearbox device (2) for a motor vehicle includes a box housing (21) formed with a window (211), and an ultimate drive shaft (24) extending through the box housing (21). A speed change gearing (23) is disposed within the box housing (21), and includes a bevel gear set disposed in proximity to the window (211) . The bevel gear set includes a driving bevel gear (231) driven by a crankshaft (3'), and a driven bevel gear (232) sleeved removably on the ultimate drive shaft (24) and meshing with the driving bevel gear (231). A removable cover (22) is connected removably to the box housing (21) for covering the window (211), and is removable from the box housing (21) so that the bevel gear set is exposed within the window (211), thereby allowing for access to the bevel gear set via the window (211) and, thus, adjustment, maintenance, repair, and replacement of the bevel gear set.

## Description

This invention relates to a gearbox device for a motor vehicle, and more particularly to a gearbox device that includes a cover, which can be removed from a box housing so as to allow for adjustment, maintenance, repair, and replacement of gears of a bevel gear set.

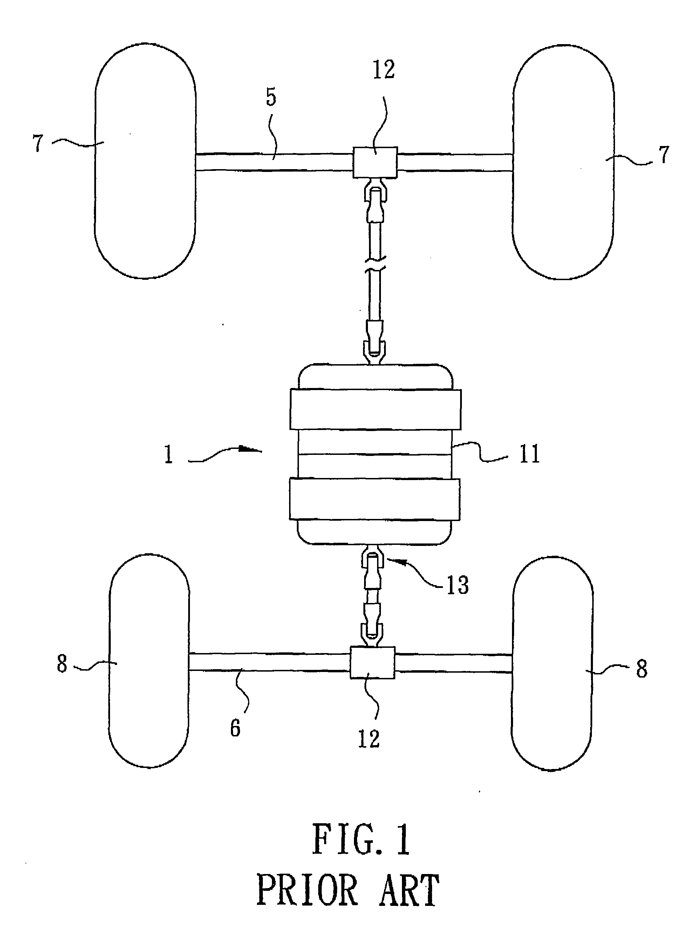

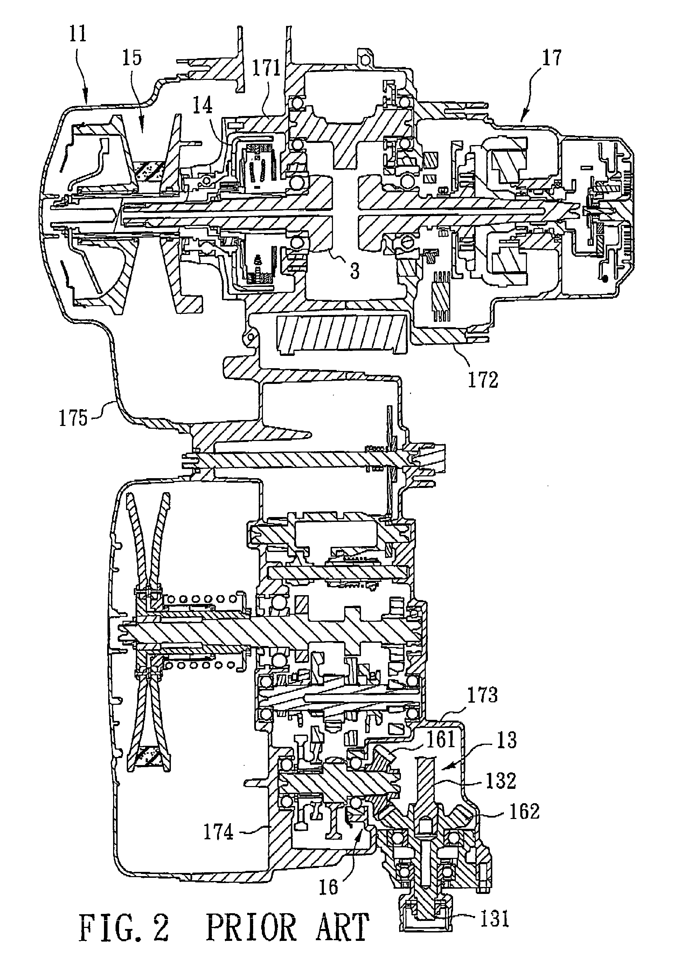

Referring to Figs. 1 and 2, a conventional transmission 1 for a four-wheel or two-wheel drive vehicle includes a manual shift-type speed change device 11, two differentials 12, and a drive shaft unit 13. The differentials 12 are disposed respectively on front and rear axles 5, 6. The drive shaft unit 13 extends through and is connected to the speed change device 11, and has two ends connected respectively to the differentials 12.

The speed change device 11 includes a clutch 14 driven by a crankshaft 3, a belt driving unit 15 controlled by the clutch 14, a speed change gearing 16 driven by the belt driving unit 15 to rotate the drive shaft unit 13, and a box housing unit 17. The box housing unit 17 includes a left crank housing 171, a right crank housing 172, a right gear housing 173, a left gear housing 174, and a speed change box cover 175. The belt driving unit 15 is disposed among the speed change box cover 175, the left crank housing 171, and the left gear housing 174. The crankshaft 3 is disposed between the left and right crank housings 171, 172. The speed change gearing 16 is disposed between the left and right gear housings 174, 173.

The drive shaft unit 13 includes a main shaft 131 and a connecting shaft 132 coupled to the main shaft 131 and extending outwardly from the right gear housing 173.

The speed change gearing 16 includes a driving bevel gear 161 driven by the belt driving unit 15, and a driven bevel gear 162 formed integrally with the main shaft 131 and meshing with the driving bevel gear 161.

During use, power is transmitted from the crankshaft 3 to front and rear wheels 7, 8 (assuming four-wheel drive) via transmission paths defined by the clutch 14, the belt driving unit 15, the speed change gearing 16, the drive shaft unit 13, the differentials 12, and the axles 5, 6.

When it is desired to effect adjustment, maintenance, repair, or replacement of the driving bevel gear 161 and/or the driven bevel gear 162, there is a need for removal of many parts, including the speed change box cover 175, the belt driving unit 15, the left gear housing 174, the speed change gearing 16, and the drive shaft unit 13. Such removal of these parts is troublesome.

The object of this invention is to provide a gearbox device for a motor vehicle, which includes a cover that is removable from a box housing so as to allow for convenient and easy adjustment, maintenance, and repair of a bevel gear set.

According to this invention, a gearbox device is used in a motor vehicle. The motor vehicle includes a crankshaft and a belt driving unit for transmitting power from the crankshaft to the gearbox device. The gearbox device includes:
a box housing formed with a window and a bevel gear-accommodating chamber in spatial communication with the window;
an ultimate drive shaft extending through the box housing;
a speed change gearing disposed within the box housing and including a bevel gear set disposed within the bevel gear-accommodating chamber in said box housing and in proximity to the window, the bevel gear set including a driving bevel gear adapted to be driven by the crankshaft, and a driven bevel gear sleeved removably on the ultimate drive shaft and meshing with the driving bevel gear; and
a removable cover connected removably to the box housing for covering the window, the removable cover being removable from the box housing so that the bevel gear set is exposed within the window, thereby allowing for access to the bevel gear set via the window and, thus, adjustment, maintenance, repair, and replacement of the bevel gear set.

These and other features and advantages of this invention will become apparent in the following detailed description of a preferred embodiment of this invention, with reference to the accompanying drawings, in which:
Fig. 1 is a schematic view of a conventional transmission for a four-wheel or two-wheel drive vehicle;
Fig. 2 is a fragmentary schematic sectional view of the conventional transmission, illustrating how a crankshaft and a drive shaft unit are interconnected by a speed change device;
Fig. 3 is a fragmentary schematic sectional view of the preferred embodiment of a gearbox device for a motor vehicle according to this invention, which is used in a transmission;
Fig. 4 is a schematic assembled sectional view of the preferred embodiment; and
Fig. 5 is a fragmentary, partly exploded, schematic sectional view of the preferred embodiment, illustrating how a cover is removed from a box housing.

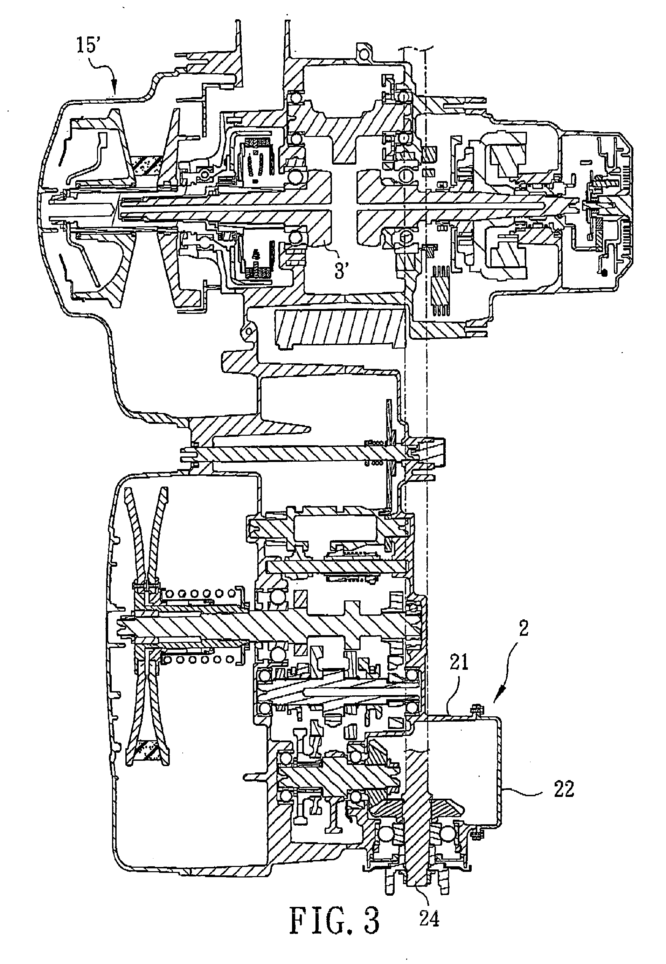

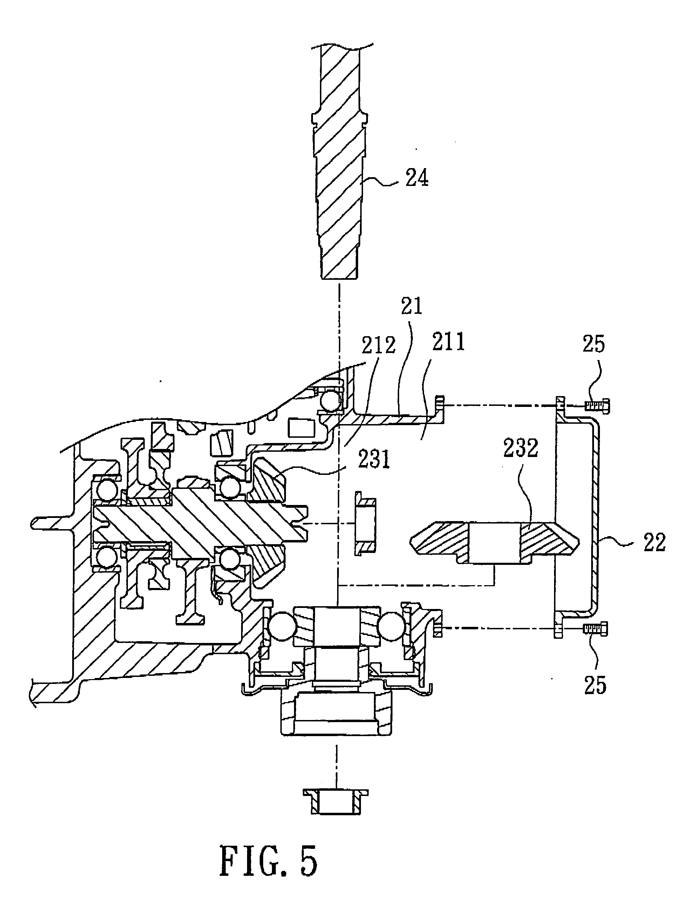

Referring to Figs. 3 to 5, the preferred embodiment of a gearbox device 2 according to this invention is used in a four-wheel or two-wheel drive vehicle, such as an all-terrain vehicle. The vehicle includes a crankshaft 3' and a belt driving unit 15' for transmitting power from the crankshaft 3' to the gearbox device 2. The gearbox device 2 includes a box housing 21, a removable cover 22, a speed change gearing 23, and an ultimate drive shaft 24.

The box housing 21 is formed with a window 211 and a bevel gear-accommodating chamber 212 in spatial communication with the window 211.

The ultimate drive shaft 24 extends through the box housing 21.

The speed change gearing 23 is disposed within the box housing 21, and includes a bevel gear set disposed within the bevel gear-accommodating chamber 212 in the box housing 21 and in proximity to the window 211. The bevel gear set includes a driving bevel gear 231 driven by the crankshaft 3' of the vehicle in a known manner, and a driven bevel gear 232 sleeved removably on the ultimate drive shaft 24 and meshing with the driving bevel gear 231.

The ultimate drive shaft 24 is connected indirectly to two or four wheels such that power can be transmitted from the belt driving unit 15' to the wheels by the gearbox device 2.

In this embodiment, the ultimate drive shaft 24 has a main shaft portion 241 journalled within the box housing 21, and a connecting shaft portion 242 extending outwardly from the box housing 21. The driven bevel gear 232 is sleeved removably on the main shaft portion 241.

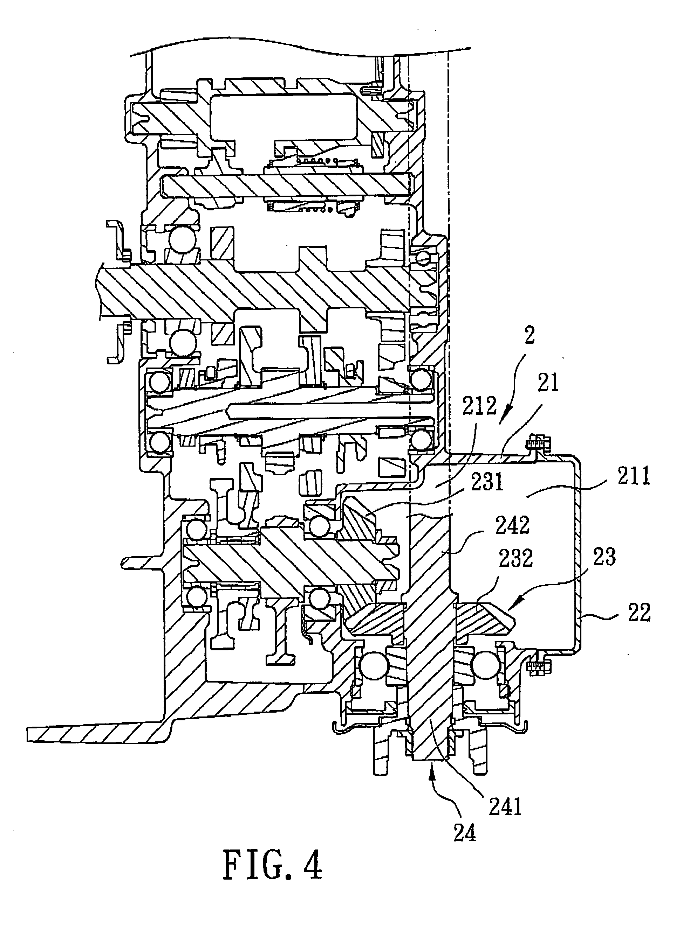

The removable cover 22 is connected removably to the box housing 21 for covering the window 211, and is removable from the box housing 21 so that the driving bevel gear 231 and the driven bevel gear 232 are exposed within the window 211, as shown in Fig. 4. This allows for access to the driving bevel gear 231 and the driven bevel gear 232 via the window 211 and, thus, adjustment, maintenance, repair, and replacement thereof. In this embodiment, the removable cover 22 is connected removably to the box housing 21 by a plurality of bolts 25. Due to this structure of the window 211 and the removable cover 22, only the removable cover 22 is required to be removed for adjustment, maintenance, repair, and replacement of the driving bevel gear 231 and/or the drive bevel gear 232. Therefore, the object of this invention is achieved.

## Claims

1. A gearbox device (2) for a motor vehicle, the motor vehicle including a crankshaft (3') and a belt driving unit (15') for transmitting power from the crankshaft (3') to the gearbox device (2), the gearbox device (2) including:
a box housing (21) formed with a window (211) and a bevel gear-accommodating chamber (212) in spatial communication with the window (211);
an ultimate drive shaft (24) extending through the box housing (21); and
a speed change gearing (23) disposed within the box housing (21) and including a bevel gear set that is disposed within the bevel gear-accommodating chamber (212) in the box housing (21) and in proximity to the window (211), the bevel gear set including a driving bevel gear (231) adapted to be driven by the crankshaft (3'), and a driven bevel gear (232) sleeved removably on the ultimate drive shaft (24) and meshing with the driving bevel gear (231);
**characterized by**:
a removable cover (22) connected removably to the box housing (21) for covering the window (211), the removable cover (22) being removable from the box housing (21) so that the bevel gear set is exposed within the window (211), thereby allowing for access to the bevel gear set via the window (211) and, thus, adjustment, maintenance, repair, and replacement of the bevel gear set.

2. The gearbox device (2) as claimed in Claim 1, further **characterized by** a plurality of bolts (25) for connecting the removable cover (22) removably to the box housing (21) .
